# EUROPEAN PATENT APPLICATION

(11) **EP 4 636 583 A1**
(43) Date of publication of application: **22.10.2025**
(21) Application number: 24219543.6
(22) Date of filing: 12.12.2024
(51) Int. Cl.: G06F 8/71, G06F 8/65, G06F 21/57

(54) **TECHNIQUES FOR VALIDATING SAFETY AGREEMENT COMPLIANCE USING SBOMS**

(30) Priority: 18.04.2024 US 202418639683
(71) Applicant: Red Hat, Inc., Raleigh, NC 27601 (US)
(72) Inventor: GRIFFIN, Leigh, Raleigh, 27601 (US); ANTINORI, Paolo, Raleigh, 27601 (US); COSENTINO, Andrea, Raleigh, 27601 (US)
(74) Representative: Murgitroyd & Company

(57) **Abstract**

Techniques for using a software bill of materials to determine whether an application is still in compliance with a set of policies after being updated, are disclosed. In response to a first version of an application being certified as compliant with a set of policies, a first software bill of materials (SBOM) associated with the first version of the application is generated. In response to determining that the first version of the application has been updated to a second version of the application, a second SBOM corresponding to the second version of the application is generated. The first SBOM and the second SBOM are compared to determine whether the second version of the application is still compliant with the set of policies.

## Description

### TECHNICAL FIELD

The present disclosure relates generally to software technology, and more particularly, to systems and methods of determining whether an application is still in compliance with a set of policies after being updated, using a software bill of materials.

### BACKGROUND

Industries such as the automotive and aviation industries have a strong requirement for functional safety. Modern vehicles (e.g., automotive vehicles, marine vehicles, railed vehicles, aircraft vehicles, etc.) include computing systems that can execute one or more applications (e.g., software, computer code) to provide a variety of different critical services for managing the critical operations of the vehicle. For this reason, applications that execute on a vehicle's computing system are often classified as being either functional safety (FUSA) compliant or non-FUSA compliant (sometimes referred to as user application). An application that is classified as FUSA compliant is backed by a contractual agreement/engagement from a vendor of the application that the application will follow certain best practices/policies to ensure that the application behaves in a documented way and that such behavior will be consistent over time and consistent through changes to the code.

A software bill of materials (SBOM) is a document that provides a detailed inventory of the components and dependencies used in an application. A SBOM may list all of the libraries, frameworks, and their respective versions that are utilized within the application. The visibility provided by an SBOM can aid in understanding the application's composition, identifying potential vulnerabilities, and tracking compliance obligations associated with the application.

### SUMMARY

According to a first aspect of the present disclosure there is provided a method, comprising: in response to a first version of an application being certified as compliant with a set of policies, generating a first software bill of materials (SBOM) associated with the first version of the application; in response to determining that the first version of the application has been updated to a second version of the application, generating a second SBOM corresponding to the second version of the application; and comparing, by a processing device, the first SBOM and the second SBOM to determine whether the second version of the application is compliant with the set of policies.

The method may further comprise, in response to determining that the second version of the application is not compliant with the set of policies, performing one or more mitigation actions.

The one or more mitigation actions may be performed based on: an importance score of the application; an importance score of one or more components of the second version of the application that are determined to not comply with the set of policies based on the comparison; and changes to a dependency structure of a component of the second version of the application relative to the first version of the application.

A first mitigation action of the one or more mitigation actions may comprise: migrating the second version of the application to a container; and determining if the second version of the application can execute in a manner that is sufficiently compatible with the set of policies, wherein the first version of the application executes while it is determined if the second version of the application can execute in a manner that is sufficiently compatible with the set of policies.

A second mitigation action of the one or more mitigation actions may comprise: executing the second version of the application with a limited set of permissions and access rights; and while the second version of the application executes with the limited set of permissions and access rights, determining if the second version of the application can execute in a manner that is sufficiently compatible with the set of policies. In response to determining that the second version of the application cannot execute in a manner that is sufficiently compatible with the set of policies based on the second mitigation action, the method may further comprise performing a third mitigation action comprising: stopping execution of the second version of the application; and rolling the application back to the first version of the application.

Each of the first and second SBOM may comprise a list of components and dependencies used in a respective version of the application.

According to a second aspect of the present disclosure there is provided a system comprising: a memory; and a processing device operatively coupled to the memory, the processing device being configured to: in response to a first version of an application being certified as compliant with a set of policies, generate a first software bill of materials (SBOM) associated with the first version of the application; in response to determining that the first version of the application has been updated to a second version of the application, generate a second SBOM corresponding to the second version of the application; and compare the first SBOM and the second SBOM to determine whether the second version of the application is compliant with the set of policies.

The processing device may be further configured to, in response to determining that the second version of the application is not compliant with the set of policies, perform one or more mitigation actions.

The processing device may perform the one or more mitigation actions based on: an importance score of the application; an importance score of one or more components of the second version of the application that are determined to not comply with the set of policies based on the comparison; and changes to a dependency structure of a component of the second version of the application relative to the first version of the application.

To perform a first mitigation action of the one or more mitigation actions, the processing device may be configured to: migrate the second version of the application to a container; and determine if the second version of the application can execute in a manner that is sufficiently compatible with the set of policies, wherein the first version of the application executes while it is determined if the second version of the application can execute in a manner that is sufficiently compatible with the set of policies.

To perform a second mitigation action of the one or more mitigation actions, the processing device may be configured to: execute the second version of the application with a limited set of permissions and access rights; and while the second version of the application executes with the limited set of permissions and access rights, determine if the second version of the application can execute in a manner that is sufficiently compatible with the set of policies.

In response to determining that the second version of the application cannot execute in a manner that is sufficiently compatible with the set of policies based on the second mitigation action, the processing device may perform a third mitigation action comprising: stopping execution of the second version of the application; and rolling the application back to the first version of the application.

Each of the first and second SBOM may comprise a list of components and dependencies used in a respective version of the application.

According to a third aspect of the present disclosure there is provided a non-transitory computer-readable medium having instructions stored thereon which, when executed by a processing device, cause the processing device to: in response to a first version of an application being certified as compliant with a set of policies, generate a first software bill of materials (SBOM) associated with the first version of the application; in response to determining that the first version of the application has been updated to a second version of the application, generate a second SBOM corresponding to the second version of the application; and compare, by the processing device, the first SBOM and the second SBOM to determine whether the second version of the application is compliant with the set of policies.

The instructions may cause the processing device to, in response to determining that the second version of the application is not compliant with the set of policies, perform one or more mitigation actions.

The instructions may cause the processing device to perform the one or more mitigation actions based on: an importance score of the application; an importance score of one or more components of the second version of the application that are determined to not comply with the set of policies based on the comparison; and changes to a dependency structure of a component of the second version of the application relative to the first version of the application.

To perform a first mitigation action of the one or more mitigation actions, the instructions may cause the processing device to: migrate the second version of the application to a container; and determine if the second version of the application can execute in a manner that is sufficiently compatible with the set of policies, wherein the first version of the application executes while it is determined if the second version of the application can execute in a manner that is sufficiently compatible with the set of policies.

To perform a second mitigation action of the one or more mitigation actions, the instructions may cause the processing device to: execute the second version of the application with a limited set of permissions and access rights; and while the second version of the application executes with the limited set of permissions and access rights, determine if the second version of the application can execute in a manner that is sufficiently compatible with the set of policies.

In response to determining that the second version of the application cannot execute in a manner that is sufficiently compatible with the set of policies based on the second mitigation action, the instructions may cause the processing device to perform a third mitigation action comprising: stopping execution of the second version of the application; and rolling the application back to the first version of the application.

Each of the first and second SBOM may comprise a list of components and dependencies used in a respective version of the application.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram depicting an example system, according to some embodiments of the present disclosure.
FIG. 2 is a block diagram of the system illustrated in FIG. 1, illustrating generation of SBOMs for different versions of an application, according to some embodiments of the present disclosure.
FIGS. 3A and 3B are detailed block diagrams of the system illustrated in FIG. 1, illustrating the process of comparing the SBOMs generated for the different versions of the application to determine if the application is still FUSA compliant post-update, according to some embodiments of the present disclosure.
FIG. 4 is a flow diagram depicting a method of determining if an application is still FUSA compliant post-update using dynamically generated SBOMs, according to some embodiments of the present disclosure.
FIG. 5 is a block diagram of an example computing device that may perform one or more of the operations described herein, in accordance with some embodiments.

### DETAILED DESCRIPTION

An application may pass numerous stringent tests to ensure that it is FUSA compliant. However, live updates to an application that has already been certified as FUSA compliant can change the functionality of the application such that it is no longer FUSA compliant. Examples of such updates include peer to peer updates, a hot patch or any other update mechanism that fundamentally changes the source code of an application that has already been certified as FUSA compliant.

Every vehicle may include a large number of different applications, many (if not most) of which must be FUSA compliant. In addition, the set of tests that must be passed to ensure FUSA compliance for a single application is large. As a result, ensuring that all of the relevant applications on a single vehicle are FUSA compliant is a computationally intensive task. If, for each application, the set of tests must be executed each time the application is updated, this would result in a fairly continuous and large-scale computational demand.

Aspects of the present disclosure address the above-noted and other deficiencies by comparing SBOMs corresponding to different versions of an application to determine if the application is still FUSA compliant post-update. In response to a first version of an application being certified as compliant with a set of policies, a first software bill of materials (SBOM) associated with the first version of the application is generated. In response to determining that the first version of the application has been updated to a second version of the application, a second SBOM corresponding to the second version of the application is generated. The first SBOM and the second SBOM are compared to determine whether the second version of the application is still compliant with the set of policies.

If it is determined that the updated application is no longer compliant with the set of policies, one or more mitigation actions can be performed to cordon off the updated application while it is determined if the updated application can still function in a manner that is sufficiently compliant with the set of policies.

It should be noted that although described with respect to verifying whether a post-update application is still FUSA compliant or not, this is for example purposes only and not a limitation. The embodiments of the present disclosure may be used to determine if an application (post-update) is still compliant with any appropriate agreement, whether safety related or not.

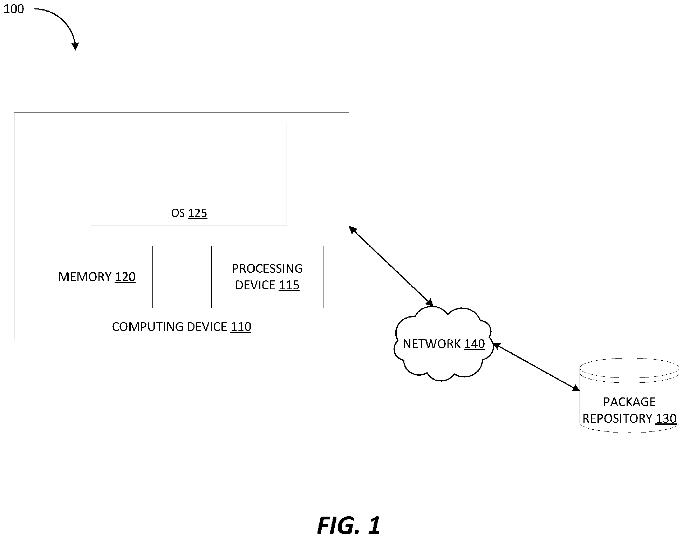

FIG. 1 is a block diagram that illustrates an example system 100. As illustrated in FIG. 1, the system 100 includes computing device 110, package repository 130 and a network 140. The computing device 110 and the package repository 130 may be coupled to each other (e.g., may be operatively coupled, communicatively coupled, may communicate data/messages with each other) via network 140. Network 140 may be a public network (e.g., the internet), a private network (e.g., a local area network (LAN) or wide area network (WAN)), or a combination thereof. In one embodiment, network 140 may include a wired or a wireless infrastructure, which may be provided by one or more wireless communications systems, such as a WiFi^{™} hotspot connected with the network 140 and/or a wireless carrier system that can be implemented using various data processing equipment, communication towers (e.g., cell towers), etc. The network 140 may carry communications (e.g., data, message, packets, frames, etc.) between computing device 110 and the package repository 130. The computing device 110 and the package repository 130 may each include hardware such as processing device 115 (e.g., processors, central processing units (CPUs), memory 120 (e.g., random access memory (RAM), storage devices (e.g., hard-disk drive (HDD), solid-state drive (SSD), etc.), and other hardware devices (e.g., sound card, video card, etc.). A storage device may comprise a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices.

FIG. 1 and the other figures may use like reference numerals to identify like elements. A letter after a reference numeral, such as "112A," indicates that the text refers specifically to the element having that particular reference numeral. A reference numeral in the text without a following letter, such as "112," refers to any or all of the elements in the figures bearing that reference numeral.

The computing device 110 and the package repository 130 may each comprise any suitable type of computing device or machine that has a programmable processor including, for example, server computers, desktop computers, laptop computers, tablet computers, smartphones, set-top boxes, etc. In some examples, the computing device 110 and the package repository 130 may each comprise a single machine or may include multiple interconnected machines (e.g., multiple servers configured in a cluster). The computing device 110 and the package repository 130 may be implemented by a common entity/organization or may be implemented by different entities/organizations. For example, computing device 110 may be operated by a first company/corporation and package repository 130 may be operated by a second company/corporation. The computing device 110 and the package repository 130 may each execute or include an operating system (OS), as discussed in more detail below. The OSs of the computing device 110 (shown in FIG. 1 as OS 125) and the package repository 130 may manage the execution of other components (e.g., software, applications, etc.) and/or may manage access to the hardware (e.g., processors, memory, storage devices etc.) of their respective computing device. In some embodiments, computing device 110 may represent e.g., an electronic control unit (ECU) of a vehicle.

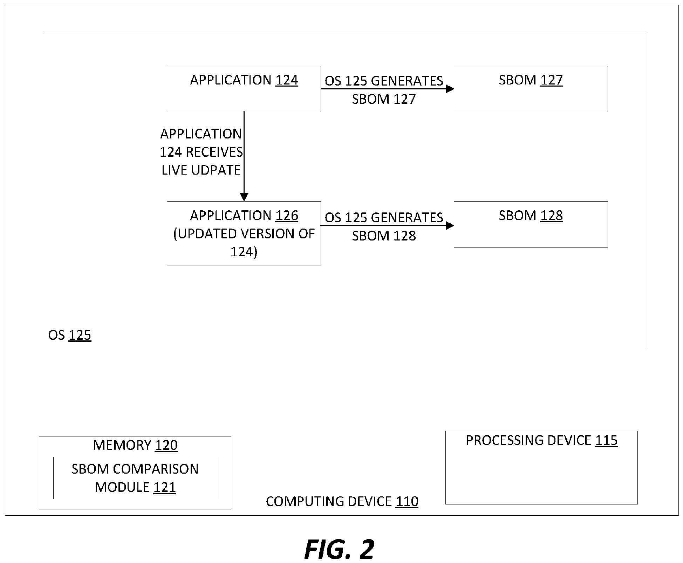

FIG. 2 illustrates the OS 125 in accordance with some embodiments of the present disclosure. The OS 125 may execute an application 124 that has already been certified as FUSA compliant in any appropriate manner. In response to the application 124 being certified as FUSA compliant, the OS 125 (executing SBOM comparison module 121) may generate a SBOM 127 associated with the application 124. As discussed herein, the SBOM 127 may include a detailed inventory of the components (e.g., libraries, frameworks, and their respective versions) and dependencies used in an application. The OS 125 may use any appropriate tool for generating SBOMs such as the jbom tool, for example. The SBOM 127 may be a reference SBOM for the application 124 which is FUSA compliant.

As the application 124 executes (i.e., at run time), the OS 125 may monitor the application 124 for any updates, including changes to the code and/or changes to the dependencies of the components of the application 124. The OS 125 may use any appropriate and well-known technique for monitoring changes to an application. In response to determining that the application 124 has been updated (e.g., after receiving an update from the package repository 130), the OS 125 (executing SBOM comparison module 121) may dynamically generate a new SBOM 128 corresponding to the updated version of the application 124 (hereinafter referred to as application 126).

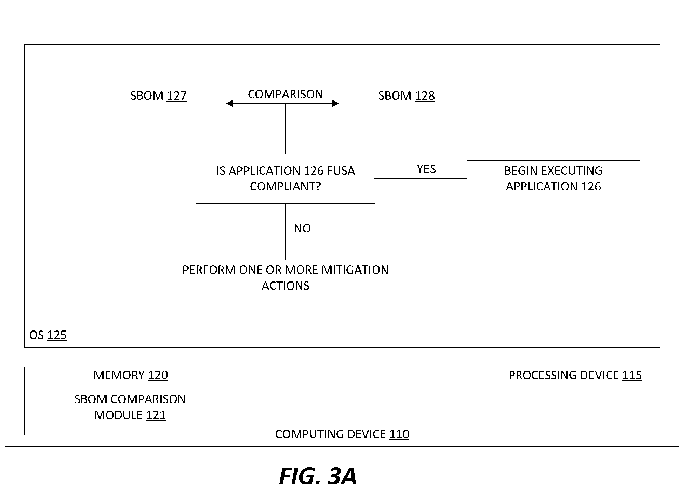

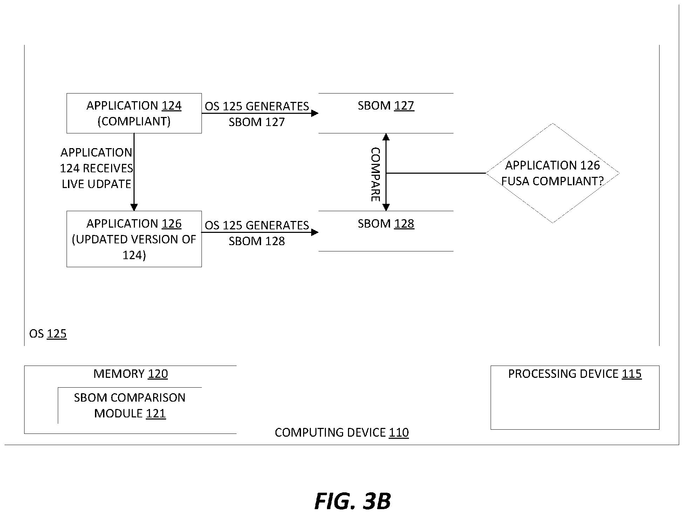

Referring now to FIGS. 3A and 3B, upon generating the SBOM 128, the OS 125 may compare the SBOM 127 and the SBOM 128 to determine if the application 126 is FUSA compliant. In some embodiments, the SBOM 127 may list certain components that cannot change. For example, the SBOM 127 may list one or more certificates, each of which comprises secret information that the vehicle uses to communicate with e.g., update serves. Each certificate is signed and is intended to remain immutable. If there is a difference between any of the certificates listed in the SBOM 127 and the corresponding certificate in the SBOM 128, the OS 125 may determine that the application 126 is not FUSA compliant. This is because the difference in the listed certificates may implicate a safety issue caused by a third party that is attempting to interfere with the vehicle, or "trick" the vehicle into communicating with a different machine than the intended update server.

Based on the comparison, the OS 125 may determine if the application 126 is FUSA compliant. If the OS 125 determines that the application 126 is FUSA compliant, then the OS 125 may begin executing the application 126. If the OS 125 determines that the application 126 is not FUSA compliant, it may indicate which components or dependencies among components of the application 126 are not FUSA compliant (i.e., are different from their corresponding component or dependency in the reference SBOM 127) and perform one or more mitigation actions to determine whether the application 126 can execute in a manner that is sufficiently FUSA compliant (as discussed in further detail herein). In some embodiments, the OS 125 may determine which of the one or more mitigation actions to perform based on an importance classification of the application 124, an importance classification of each of the one or more components of the application 126 that are determined by the OS 125 to not be FUSA compliant, and/or changes in the dependencies among components of the application 126. An importance classification may be an indication of the impact of a particular application or component on the safety of the vehicle.

For example, an application relating to braking functionality may have an importance classification of "high," since braking functionality is critical to the safety of the vehicle. However, an application relating to navigation may have an importance classification of "medium" or "low," since navigation functionality is important but not critical for vehicle safety. Similarly, each component of an application may have an importance classification. For example, a braking application may have a brake pedal interface component, an anti-lock braking component), a traction control component, and a collision avoidance component, all of which are critical to the functioning of the braking application and therefore have an importance classification of "high." However, the braking application may also have a "race mode" which is not essential to the functioning of the braking application and may have an importance classification of "low." In addition, while the dependency structure of each component of the application 126 may not have an importance classification, the OS 125 (executing the SBOM comparison module 121) may assume that if the dependency structure of a component having an importance classification of "high" has changed, this may also have a critical impact on the safety of the vehicle.

A first mitigation action of the one or more mitigation actions may comprise instantiating the application 124 (i.e., the first version of the application), migrating the application 126 to a container and performing a set of tests to determine if the application 126 can execute in a manner that is sufficiently FUSA compliant. The instantiated application 124 may execute while the OS 125 determines if the application 126 can execute in a manner that is sufficiently FUSA compliant. The application 126 may be able to execute in a manner that is sufficiently FUSA compliant if none of the one or more components of the application 126 that are not FUSA compliant have an importance classification of "high," and the functionality/structure of each of the one or more components is within a predefined threshold of the functionality/structure indicated by the best practices/policies associated with FUSA compliance. Similarly, the application 126 may be able to execute in a manner that is sufficiently FUSA compliant if changes to the dependency structure of any components does not prevent those components from functioning within a predefined threshold of the functionality indicated by the best practices/policies associated with FUSA compliance.

A second mitigation action of the one or more mitigation actions may comprise executing the application 126 with a limited set of permissions and access rights while the OS 125 determines whether the application 126 can execute in a manner that is sufficiently FUSA compliant. A third mitigation action of the one or more mitigation actions may comprise forcibly stopping the application 126 and rolling back to the application 124.

In some embodiments, if the application 126 has an importance classification of "high" (e.g., the application 126 relates to braking functionality), any of the one or more components thereof that are not FUSA compliant have an importance classification of "high" or the dependency structure of a component having an importance classification of "high" has changed, the OS 125 may immediately perform the third mitigation action. More specifically, the OS 125 may forcibly stop the application 126, and roll back to the application 124. In other embodiments, even if the application 124 has an importance classification of "high," the OS 125 may determine what mitigation action(s) to take based on the importance classification of the one or more components of the application 126 that are determined by the OS 125 to not be FUSA compliant or changes to the dependency structure of one or more components of the application 126 (relative to application 124).

For example, if none of the one or more components that are not FUSA compliant has an importance classification of "high," the OS 125 may execute the application 126 with a limited set of permissions and access rights while it determines whether the application 126 can execute in a manner that is sufficiently FUSA compliant (i.e., the second mitigation action as discussed herein). In another example, if none of the one or more components that are not FUSA compliant has an importance classification of "high," the OS 125 may instantiate the application 124 (i.e., the first version of the application), migrate the application 126 to a container and determine if the application 126 can execute in a manner that is sufficiently FUSA compliant (i.e., the first mitigation action as discussed herein). The instantiated application 124 may execute while the OS 125 determines if the application 126 can execute in a manner that is sufficiently FUSA compliant. In either of the above examples, if the OS 125 determines that the application 126 cannot execute in a manner that is sufficiently FUSA compliant, it may perform the third mitigation action and roll back to the first version of the application 124. If the OS 125 determines that the application 126 can execute in a manner that is sufficiently FUSA compliant, it may restore the full set of permissions/access rights (if applicable) or migrate the application 126 back from the container (if applicable). The OS 125 may then begin executing the application 126.

Comparing the associated SBOMs is more efficient than comparing the different versions of the application 124. This is because the OS 125 primarily interacts with the binary of the application 124 and does not generally have access to the actual source code. Thus, comparing the different versions of the application 124 would require reversing the corresponding binary of each version of the application 124 which is time and computational resource intensive. Generation of SBOM can be easily performed using any appropriate tool for generating SBOMs and SBOMs provide metadata for applications that is otherwise difficult to reproduce.

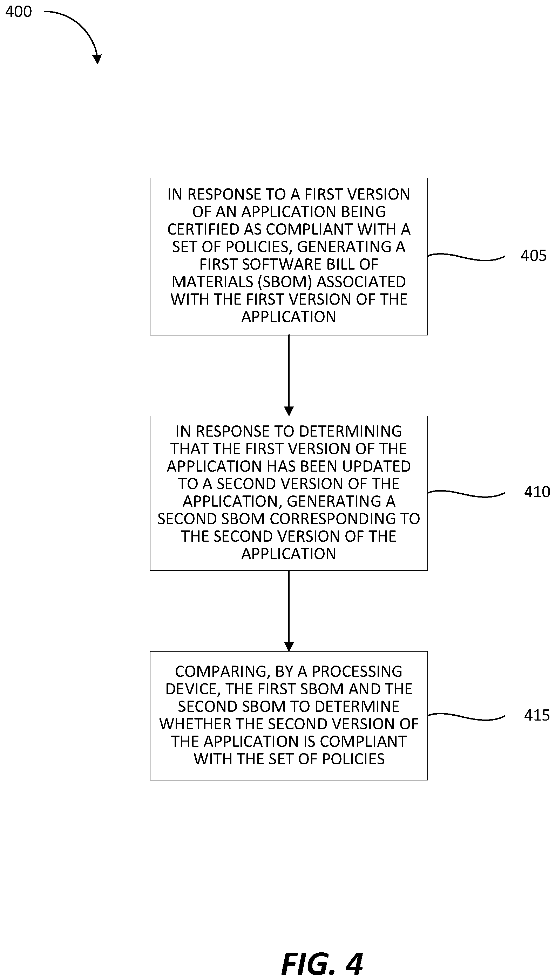

FIG. 4 is a flow diagram depicting a method 400 of enforcing safety agreements using dynamically generated SBOMs. Method 400 may be performed by processing logic that may include hardware (e.g., circuitry, dedicated logic, programmable logic, a processor, a processing device, a central processing unit (CPU), a system-on-chip (SoC), etc.), software (e.g., instructions and/or an application that is running/executing on a processing device), firmware (e.g., microcode), or a combination thereof. In some embodiments, method 400 may be performed by processing device 115 (executing OS 125 and SBOM comparison module 121), as shown in FIGS. 2, 3A and 3B.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

Referring also to FIGS. 2, 3A and3B, the OS 125 may execute an application 124 that has already been certified as FUSA compliant in any appropriate manner. At block 405, in response to the application 124 being certified as FUSA compliant, the OS 125 (executing SBOM comparison module 121) may generate a SBOM 127 associated with the application 124. As discussed herein, the SBOM 127 may include a detailed inventory of the components (e.g., libraries, frameworks, and their respective versions) and dependencies used in an application. The OS 125 may use any appropriate tool for generating SBOMs such as the jbom tool, for example. The SBOM 127 may be a reference SBOM for the application 124 which is FUSA compliant.

As the application 124 executes, the OS 125 may monitor the application 124 for any updates, including changes to the code and/or changes to the dependencies of the components of the application 124. The OS 125 may use any appropriate and well-known technique for monitoring changes to an application. At block 410, in response to determining that the application 124 has been updated, the OS 125 (executing SBOM comparison module 121) may dynamically generate a new SBOM 128 corresponding to the updated version of the application 124 (hereinafter referred to as application 126).

Referring now to FIG. 3, upon generating the SBOM 128, at block 415 the OS 125 may compare the SBOM 127 and the SBOM 128 to determine if the application 126 is FUSA compliant. In some embodiments, the SBOM 127 may list certain components that cannot change. For example, the SBOM 127 may list one or more certificates, each of which comprises secret information that the vehicle uses to communicate with e.g., update serves. Each certificate is signed and is intended to remain immutable. If there is a difference between any of the certificates listed in the SBOM 127 and the corresponding certificate in the SBOM 128, the OS 125 may determine that the application 126 is not FUSA compliant. This is because the difference in the listed certificates may implicate a safety issue caused by a third party that is attempting to interfere with the vehicle, or "trick" the vehicle into communicating with a different machine than the intended update server.

Based on the comparison, the OS 125 may determine if the application 126 is FUSA compliant. If the OS 125 determines that the application 126 is FUSA compliant, then the OS 125 may begin executing the application 126. If the OS 125 determines that the application 126 is not FUSA compliant, it may indicate which components or dependencies among components of the application 126 are not FUSA compliant (i.e., are different from their corresponding component or dependency in the reference SBOM 127) and perform one or more mitigation actions to determine whether the application 126 can execute in a manner that is sufficiently FUSA compliant (as discussed in further detail herein). In some embodiments, the OS 125 may determine which of the one or more mitigation actions to perform based on an importance classification of the application 124, an importance classification of each of the one or more components of the application 126 that are determined by the OS 125 to not be FUSA compliant, and/or changes in the dependencies among components of the application 126. An importance classification may be an indication of the impact of a particular application or component on the safety of the vehicle.

For example, an application relating to braking functionality may have an importance classification of "high," since braking functionality is critical to the safety of the vehicle. However, an application relating to navigation may have an importance classification of "medium" or "low," since navigation functionality is important but not critical for vehicle safety. Similarly, each component of an application may have an importance classification. For example, a braking application may have a brake pedal interface component, an anti-lock braking component), a traction control component, and a collision avoidance component, all of which are critical to the functioning of the braking application and therefore have an importance classification of "high." However, the braking application may also have a "race mode" which is not essential to the functioning of the braking application and may have an importance classification of "low." In addition, while the dependency structure of each component of the application 126 may not have an importance classification, the OS 125 (executing the SBOM comparison module 121) may assume that if the dependency structure of a component having an importance classification of "high" has changed, this may also have a critical impact on the safety of the vehicle.

A first mitigation action of the one or more mitigation actions may comprise instantiating the application 124 (i.e., the first version of the application), migrating the application 126 to a container and performing a set of tests to determine if the application 126 can execute in a manner that is sufficiently FUSA compliant. The instantiated application 124 may execute while the OS 125 determines if the application 126 can execute in a manner that is sufficiently FUSA compliant. The application 126 may be able to execute in a manner that is sufficiently FUSA compliant if none of the one or more components of the application 126 that are not FUSA compliant have an importance classification of "high," and the functionality/structure of each of the one or more components is within a predefined threshold of the functionality/structure indicated by the best practices/policies associated with FUSA compliance. Similarly, the application 126 may be able to execute in a manner that is sufficiently FUSA compliant if changes to the dependency structure of any components does not prevent those components from functioning within a predefined threshold of the functionality indicated by the best practices/policies associated with FUSA compliance.

A second mitigation action of the one or more mitigation actions may comprise executing the application 126 with a limited set of permissions and access rights while the OS 125 determines whether the application 126 can execute in a manner that is sufficiently FUSA compliant. A third mitigation action of the one or more mitigation actions may comprise forcibly stopping the application 126 and rolling back to the application 124.

In some embodiments, if the application 126 has an importance classification of "high" (e.g., the application 126 relates to braking functionality), any of the one or more components thereof that are not FUSA compliant have an importance classification of "high" or the dependency structure of a component having an importance classification of "high" has changed, the OS 125 may immediately perform the third mitigation action. More specifically, the OS 125 may forcibly stop the application 126, and roll back to the application 124. In other embodiments, even if the application 124 has an importance classification of "high," the OS 125 may determine what mitigation action(s) to take based on the importance classification of the one or more components of the application 126 that are determined by the OS 125 to not be FUSA compliant or changes to the dependency structure of one or more components of the application 126 (relative to application 124).

For example, if none of the one or more components that are not FUSA compliant has an importance classification of "high," the OS 125 may execute the application 126 with a limited set of permissions and access rights while it determines whether the application 126 can execute in a manner that is sufficiently FUSA compliant (i.e., the second mitigation action as discussed herein). In another example, if none of the one or more components that are not FUSA compliant has an importance classification of "high," the OS 125 may instantiate the application 124 (i.e., the first version of the application), migrate the application 126 to a container and determine if the application 126 can execute in a manner that is sufficiently FUSA compliant (i.e., the first mitigation action as discussed herein). The instantiated application 124 may execute while the OS 125 determines if the application 126 can execute in a manner that is sufficiently FUSA compliant. In either of the above examples, if the OS 125 determines that the application 126 cannot execute in a manner that is sufficiently FUSA compliant, it may perform the third mitigation action and roll back to the first version of the application 124. If the OS 125 determines that the application 126 can execute in a manner that is sufficiently FUSA compliant, it may restore the full set of permissions/access rights (if applicable) or migrate the application 126 back from the container (if applicable). The OS 125 may then begin executing the application 126.

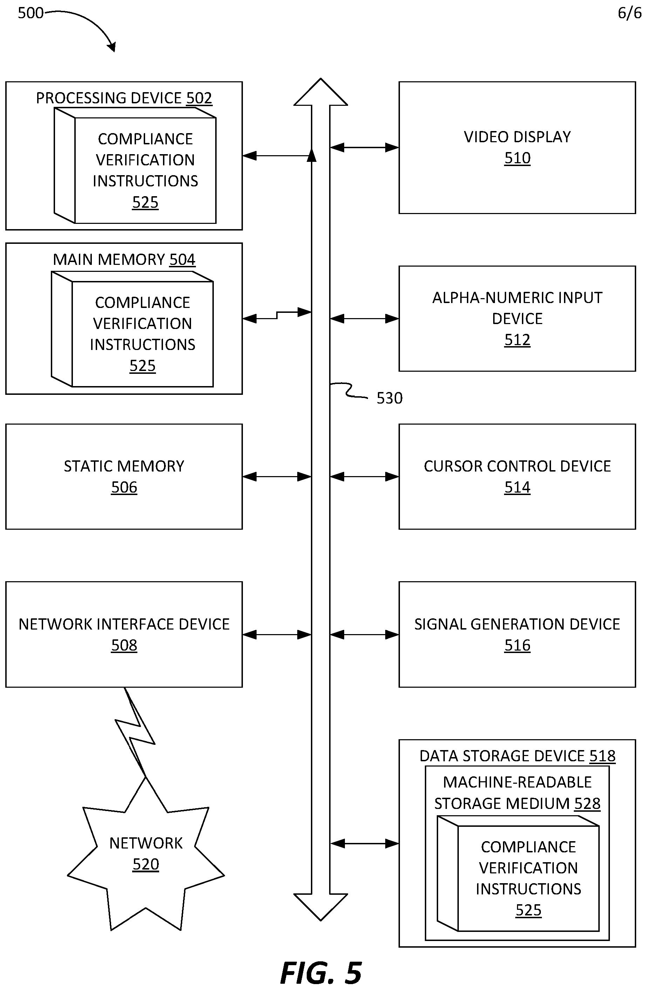

FIG. 5 is a block diagram of an example computing device 500 that may perform one or more of the operations described herein, in accordance with some embodiments. Computing device 500 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 500 may include a processing device *(e.g.,* a general purpose processor, a PLD, etc.) 502, a main memory 504 (e.g., synchronous dynamic random access memory (DRAM), read-only memory (ROM)), a static memory 506 *(e.g.,* flash memory and a data storage device 518), which may communicate with each other via a bus 530.

Processing device 502 may be provided by one or more general-purpose processing devices such as a microprocessor, central processing unit, or the like. In an illustrative example, processing device 502 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 502 may also include one or more special-purpose processing devices such as an application specific integrated circuit (ASIC), a field programmable gate array (FPGA), a digital signal processor (DSP), network processor, or the like. The processing device 502 may be configured to execute the operations described herein, in accordance with one or more aspects of the present disclosure, for performing the operations and steps discussed herein.

Computing device 500 may further include a network interface device 508 which may communicate with a communication network 520. The computing device 500 also may include a video display unit 510 (*e.g.,* a liquid crystal display (LCD) or a cathode ray tube (CRT)), an alphanumeric input device 512 *(e.g.,* a keyboard), a cursor control device 514 *(e.g.,* a mouse) and an acoustic signal generation device 516 (*e.g.,* a speaker). In one embodiment, video display unit 510, alphanumeric input device 512, and cursor control device 514 may be combined into a single component or device (*e.g.,* an LCD touch screen).

Data storage device 518 may include a computer-readable storage medium 528 on which may be stored one or more sets of compliance verification instructions 525 that may include instructions for one or more components, agents, and/or functions (e.g., compliance plugin 126 in FIG. 3) for carrying out the operations described herein, in accordance with one or more aspects of the present disclosure. The compliance verification instructions 525 may also reside, completely or at least partially, within main memory 504 and/or within processing device 502 during execution thereof by computing device 500, main memory 504 and processing device 502 also constituting computer-readable media. The compliance verification instructions 525 may further be transmitted or received over a communication network 520 via network interface device 508.

While computer-readable storage medium 528 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media and magnetic media.

Unless specifically stated otherwise, terms such as "generating," "comparing," "determining," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. §112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
in response to a first version of an application being certified as compliant with a set of policies, generating a first software bill of materials (SBOM) associated with the first version of the application;
in response to determining that the first version of the application has been updated to a second version of the application, generating a second SBOM corresponding to the second version of the application; and
comparing, by a processing device, the first SBOM and the second SBOM to determine whether the second version of the application is compliant with the set of policies.

2. The method of claim 1, further comprising, in response to determining that the second version of the application is not compliant with the set of policies, performing one or more mitigation actions.

3. The method of claim 2, wherein the one or more mitigation actions are performed based on:
an importance score of the application;
an importance score of one or more components of the second version of the application that are determined to not comply with the set of policies based on the comparison; and
changes to a dependency structure of a component of the second version of the application relative to the first version of the application.

4. The method of claim 2, wherein a first mitigation action of the one or more mitigation actions comprises:
migrating the second version of the application to a container; and
determining if the second version of the application can execute in a manner that is sufficiently compatible with the set of policies, wherein the first version of the application executes while it is determined if the second version of the application can execute in a manner that is sufficiently compatible with the set of policies.

5. The method of claim 2, wherein a second mitigation action of the one or more mitigation actions comprises:
executing the second version of the application with a limited set of permissions and access rights; and
while the second version of the application executes with the limited set of permissions and access rights, determining if the second version of the application can execute in a manner that is sufficiently compatible with the set of policies.

6. The method of claim 5, wherein in response to determining that the second version of the application cannot execute in a manner that is sufficiently compatible with the set of policies based on the second mitigation action, performing a third mitigation action comprising:
stopping execution of the second version of the application; and
rolling the application back to the first version of the application.

7. The method of claim 2, wherein each of the first and second SBOM comprises a list of components and dependencies used in a respective version of the application.

8. A system comprising:
a memory; and
a processing device operatively coupled to the memory, the processing device being configured to:
in response to a first version of an application being certified as compliant with a set of policies, generate a first software bill of materials (SBOM) associated with the first version of the application;
in response to determining that the first version of the application has been updated to a second version of the application, generate a second SBOM corresponding to the second version of the application; and
compare the first SBOM and the second SBOM to determine whether the second version of the application is compliant with the set of policies.

9. The system of claim 8, wherein the processing device is further configured to, in response to determining that the second version of the application is not compliant with the set of policies, perform one or more mitigation actions.

10. The system of claim 9, wherein the processing device performs the one or more mitigation actions based on:
an importance score of the application;
an importance score of one or more components of the second version of the application that are determined to not comply with the set of policies based on the comparison; and
changes to a dependency structure of a component of the second version of the application relative to the first version of the application.

11. The system of claim 9, wherein to perform a first mitigation action of the one or more mitigation actions, the processing device is to:
migrate the second version of the application to a container; and
determine if the second version of the application can execute in a manner that is sufficiently compatible with the set of policies, wherein the first version of the application executes while it is determined if the second version of the application can execute in a manner that is sufficiently compatible with the set of policies.

12. The system of claim 9, wherein to perform a second mitigation action of the one or more mitigation actions, the processing device is to:
execute the second version of the application with a limited set of permissions and access rights; and
while the second version of the application executes with the limited set of permissions and access rights, determine if the second version of the application can execute in a manner that is sufficiently compatible with the set of policies.

13. The system of claim 12, wherein in response to determining that the second version of the application cannot execute in a manner that is sufficiently compatible with the set of policies based on the second mitigation action, the processing device is to perform a third mitigation action comprising:
stopping execution of the second version of the application; and
rolling the application back to the first version of the application.

14. The system of claim 9, wherein each of the first and second SBOM comprises a list of components and dependencies used in a respective version of the application.

15. A non-transitory computer-readable medium having instructions stored thereon which, when executed by a processing device, cause the processing device to perform the method of any of claims 1-7
